# EUROPÄISCHE PATENTSCHRIFT

(11) **EP 3 353 007 B1**
(45) Veröffentlichungstag und Bekanntmachung des Hinweises auf die Patenterteilung: **01.09.2021**
(21) Anmeldenummer: 16766500.9
(22) Anmeldetag: 05.09.2016
(51) Int. Cl.: B60L 50/50

(54) **FAHRZEUGSEITIGE LEISTUNGSSCHALTUNG ZUR STROMVERSORGUNG IN EINEM ELEKTRISCH ANGETRIEBENEN FAHRZEUG**
VEHICLE-SIDE POWER CIRCUIT FOR SUPPLYING POWER IN AN ELECTRICALLY DRIVEN VEHICLE
CIRCUIT DE PUISSANCE CÔTÉ VÉHICULE POUR L'ALIMENTATION EN COURANT DANS UN VÉHICULE À PROPULSION ÉLECTRIQUE

(30) Priorität: 24.09.2015 DE 102015218416
(43) Veröffentlichungstag der Anmeldung: 01.08.2018
(73) Patentinhaber: Vitesco Technologies GmbH, 30165 Hannover (DE)
(72) Erfinder: PFEILSCHIFTER, Franz, 93059 Regensburg (DE); BRÜLL, Martin, 93092 Barbing (DE); HACKMANN, Wilhelm, 10553 Berlin (DE); MÜHLBAUER, Klaus, 95688 Friedenfels (DE); SPORNRAFT, Martin, 84056 Rottenburg (DE); TÖNS, Matthias, 93049 Regensburg (DE)
(86) Internationale Anmeldenummer: PCT/EP2016/070827
(87) Internationale Veröffentlichungsnummer: WO 2017/050549

(56) Entgegenhaltungen:
- EP-A1- 2 407 339
- WO-A1-2011/151131
- WO-A1-2014/206373
- US-A1- 2012 049 770
- US-A1- 2014 265 947

## Beschreibung

Die Erfindung betrifft das Gebiet der Hybridfahrzeuge und Elektrofahrzeuge, insbesondere eine Stromversorgung innerhalb dieser Fahrzeuge.

Zum einen muss eine Stromversorgung in einem elektrisch angetriebenen Fahrzeug (d.h. einem rein elektrisch oder hybrid angetriebenen Fahrzeug) die Stromversorgung einer elektrischen Maschine zum Antrieb des Fahrzeugs gewährleisten, und zum anderen muss die Möglichkeit des Aufladens des Fahrzeugs von externen elektrischen Energiequellen möglich sein. Es ist allgemein bekannt, dass etwa Inverter in derartigen Fahrzeugen eingesetzt werden, um elektrische Energie eines elektrischen Energiespeichers mittels der elektrischen Maschine des Fahrzeugs in ein magnetisches Drehfeld zu wandeln. Ferner sind Leistungswandler bekannt, die den Austausch elektrischer Energie zwischen Fahrzeug und externem Versorgungsnetz gewährleisten, sei es zum Laden oder auch zur Rückspeisung von Energie vom Fahrzeug in das Versorgungsnetz.

Da fahrzeugseitig ein Gleichstrom-Energiespeicher verwendet wird (in Form eines Akkumulators oder eines Kondensators) und Versorgungsnetze üblicherweise Wechselspannung verwenden, treten beim Wandlungsprozess zwischen Wechselstrom und Gleichstrom hochfrequente Störanteile auf. Es ist ferner allgemein bekannt, dass derartige Störanteile mittels eines EMV-Filters (EMV steht für elektromagnetische Verträglichkeit) herausgefiltert werden, die grundsätzlich als Tiefpass ausgebildet sind.

In der Druckschrift US 8,415,904 B2 ist ein Elektromotor beschrieben, dessen Wicklungen mit Kondensatoren schaltbar zu einem LC-Filter verbunden werden können, um einen ersten Filter auszubilden, auf den ein EMV-Filter folgt, dem ein Wechselstromanschluss folgt.

Die Druckschrift US 2012/0049770 beschreibt eine Ladeschaltung, bei der über Wicklungen geladen werden kann. Die Wicklungen befinden sich jeweils in einem Querzweig einer Brückenschaltung, in der auch Kondensatoren fest integriert sind.

Die Druckschrift WO 2014/206373 A1 beschreibt ein Ladesystem mit einem dreistufigen, bidirektionalen DC/AC-Modul.

Es wurde seitens der Erfinder erkannt, dass die Filterwirkung des so gebildeten LC-Filters nicht vollständig befriedigend ist und dass der nachgeschaltete EMV-Filter mit hoher Filterwirkung ausgestaltet werden muss.

Die hier beschriebene Leistungsschaltung stellt eine Möglichkeit dar, wie dies zumindest teilweise verbessert werden kann. Offenbarung der Erfindung

Es wird eine fahrzeugseitige Leistungsschaltung nach Anspruch 1 beschrieben, bei der die Wicklungen der elektrischen Maschine (des Traktionsantriebs des Fahrzeugs oder einer anderen elektrischen Maschine im Fahrzeug, etwa ein elektrischer Klimakompressor) neben der Funktion im Rahmen der elektrischen Maschine verwendet werden, um durch Anzapfungen einen Filter höherer Ordnung auszubilden. Es ist vorgesehen, dass der EMV-Filter einen Tiefpass mindestens dritter Ordnung bildet, sodass zusammen mit mindestens einer weiteren Filterkomponente, insbesondere in Form eines Kondensators, die Wicklungen mindestens zwei Induktivitätskomponenten (aufgeteilt durch erste Anzapfungen) Wicklung einen Filter mindestens dritter Ordnung ausbilden. Dadurch werden mittels der Wicklungen der elektrischen Maschine Störanteile effektiv herausgefiltert und insbesondere eine Signalformung realisiert.

Gleichzeitig kann durch die Verwendung der mit Anzapfungen versehenen Wicklungen der elektrischen Maschine in dem Filter (neben zumindest einer weiteren Filterkomponente) die Anzahl der elektrischen Bauelemente verringert werden, die zur Realisierung eines Netzfilters notwendig sind. Insbesondere kann bei entsprechender Ausgestaltung auf einen nachgeschalteten EMV-Filter verzichtet werden.

Die hier beschriebene fahrzeugseitige Leistungsschaltung zur Stromversorgung in einem elektrisch angetriebenen Fahrzeug umfasst einen externen Wechselspannungsanschluss. Dieser dient als Plug-In-Anschluss, um etwa über ein Kabel das Fahrzeug mit einem externen Versorgungsnetz zu verbinden, um Energie zwischen Fahrzeug und Versorgungsnetz auszutauschen. Als Wechselspannungsanschluss kommen grundsätzlich kabelgebundene Ausführungen in Betracht, wobei jedoch auch eine induktive Ladeeinheit verwendet werden kann, und der externe Wechselspannungsanschluss nicht als Kabel, sondern als magnetisch gekoppeltes Spulenpaar (eine fahrzeugseitige Spule und eine stationäre Spule) ausgebildet ist.

Die Leistungsschaltung weist mindestens einen DC/AC-Wandler auf. Dieser ist zumindest als Inverter ausgestaltet (d.h. realisiert zumindest die Funktion als Inverter) und somit eingerichtet, Gleichstrom in Wechselstrom (für die Erzeugung des magnetischen Drehfelds in der elektrischen Maschine und/oder zur Rückspeisung elektrischer Energie vom Fahrzeug in ein externes Versorgungsnetz) umzuwandeln. Der DC/AC-Wandler kann zudem als Wandler mit Gleichrichtungsfunktion (mit oder ohne Spannungsniveauanpassung) ausgebildet sein, um zur Übertragung von Energie vom externen Wechselspannungsanschluss zu einem fahrzeugseitigen Energiespeicher elektrische Energie von Wechselstrom in Gleichstrom zu wandeln.

Der DC/AC-Wandler ist angeschlossen, um einen fahrzeugseitigen elektrischen Energiespeicher direkt mit der Wechselspannungsseite zu verbinden, oder indirekt über einen DC-DC-Wandler zu verbinden, der etwa zur Spannungsniveauanpassung oder zur Ladestromsteuerung erforderlich ist. Auch in der Inverterfunktion kann ein weiterer DC/DC-Wandler vorgesehen sein, der zwischen elektrischem Energiespeicher und elektrischer Maschine vorgesehen ist, etwa zur Leistungssteuerung der elektrischen Maschine oder zur Spannungsniveauanpassung. Der DC/AC-Wandler ist insbesondere als besteuerbare Vollwellenbrücke ausgestattet, insbesondere als B6C-Brücke. Der DC/AC-Wandler kann eine B6C-Brücke aufweisen. Der DC/AC-Wandler kann auch zweiteilig ausgestaltet sein.

Die Leistungsschaltung umfasst ferner eine elektrische Maschine, die insbesondere als Traktionsantrieb oder zum Antrieb von Nebenaggregaten (etwa als elektrisch betriebener Klimakompressor) ausgebildet ist. Die elektrische Maschine weist mindestens eine Wicklung auf, wobei die elektrische Maschine vorzugsweise mehrere Wicklungen aufweist, insbesondere gleichartig ausgestattete Wicklungen, die insbesondere symmetrisch geschaltet sind. Die elektrische Maschine kann mehrere Einzelwicklungen umfassen, die als Phasenwicklungen verwendet werden, um ein Drehfeld zu erzeugen. Die elektrische Maschine ist daher vorzugsweise als Synchronmaschine ausgebildet, wobei die mindestens eine erste Wicklung mindestens eine Phasenwicklung der Statorwicklung ist. Als Statorwicklung wird die Gesamtheit aller Einzelwicklungen oder Phasenwicklungen bezeichnet, die die elektrische Maschine aufweist. Die elektrische Maschine ist an der Wechselspannungsseite des DC/AC-Wandlers angeschlossen.

Die Leistungsschaltung ist mit einer Schaltvorrichtung ausgestaltet, die an die mindestens eine Wicklung angeschlossen ist.

Die Leistungsschaltung umfasst ferner einen Signalform-Filter mit mehreren ersten Kondensatoren. Diese Kondensatoren sind insbesondere als diskrete Bauelemente oder zusammen als ein diskretes Bauelement ausgebildet und sind vorzugsweise nicht Teil der elektrischen Maschine. Der Signalform-Filter ist zwischen dem DC/AC-Wandler (bzw. dessen Wechselspannungsseite) und dem Extern-Wechselstromanschluss angeschlossen. Der Extern-Wechselstromanschluss ist fahrzeugseitig angebracht, insbesondere an einer Außenhülle des Fahrzeugs und dient zur Anbindung des Fahrzeugs an externe Versorgungsnetze. Um diesen Zweck wiederzugeben, wird die Vorsilbe "extern" verwendet, wobei diese Vorsilbe nur den Zweck des Anschlusses, nicht jedoch den Ort des Anschlusses beschreibt.

Die Schaltvorrichtung verbindet wahlweise die mehreren Wicklungen innerhalb des Signalform-Filters mit dem Kondensator zu einem Tiefpass. Hier bedeutet "innerhalb", dass die Wicklungen hier funktionell dem Signalform-Filter zugeordnet sind und einen Teil des Filters bilden. In diesem Kontext sind die Wicklungen dem Signalform-Filter zugeordnet. Die Angabe "innerhalb" ist nicht als Ortsangabe zu verstehen, an dem die Verbindung hergestellt wird, vielmehr wird die Verbindung innerhalb der Schaltvorrichtung hergestellt.

Der Tiefpass ist mindestens dritter Ordnung und umfasst somit die Wicklungen bzw. deren durch die Anzapfungen gebildeten Abschnitte als Induktivitäten sowie die ersten Kondensatoren. Diese beiden Filterkomponenten sind derart geschaltet, dass sich ein Tiefpass dritter Ordnung ergibt. Als Tiefpass mindestens dritter Ordnung werden insbesondere Filter bezeichnet, die ein Tiefpassverhalten haben und deren Übertragungsfunktion ein Polynom mindestens dritter, vierter oder höherer Ordnung im Nenner trägt. Gemäß einer vergleichbaren Definition nimmt die Dämpfung des Tiefpasses oberhalb einer Grenzfrequenz des Tiefpasses mit mindestens 60 dB/Dekade zu.

Als Tiefpass dritter Ordnung kommen insbesondere Tiefpässe in Frage, die einem T-Filter einem LC-Filter mit nachgeschalter Längs-Induktivität, einem LC-Filter mit zwei oder mehr als zwei Stufen oder einem T-Filter mit einer oder mehreren Stufen von LC- und/oder T-Filtern entsprechen oder eine entsprechende Filterschaltung umfassen. Es können wie erwähnt mehrere gleiche oder unterschiedliche Filtertypen dieser Art in dem Tiefpass im Sinne der genannten Mehrstufigkeit vereint sein, etwa um eine stärkere Dämpfungswirkung bei hohen Frequenzen zu erreichen bzw. um die Flankensteilheit des Filters zu erhöhen.

Die Wicklungen weisen jeweils eine erste Anzapfung oder eine erste Anzapfung und mindestens eine zweite bzw. weitere Anzapfung auf. Dadurch werden die Wicklungen in Abschnitte unterteilt. Die Abschnitte bilden jeweils eine Induktivität in dem Signalformfilter bzw. einen (individuellen) Längspfad des LC-Filters, T-Filters oder eines Filters, das eine oder mehrere LC-Filterstufen und/oder mindestens ein oder mehrere T-Filterstufen aufweist. Bei mehreren Filterstufen sind diese kaskadiert. Vorzugsweise ist an jede der Anzapfungen und/oder an einem oder an beiden Enden der Wicklungen jeweils ein Kondensator angeschlossen, um die Kapazitätskomponente eines T-Filters, eines LC-Filters, einer T-Filterstufe oder einer LC-Filterstufe auszubilden. Jeder Abschnitt der Wicklungen trägt zur Erhöhung der Ordnung des Filters bei. Jeder Kondensator trägt zur Erhöhung der Ordnung des Filters bei. Die Wicklungen bzw. deren Abschnitte bilden einen Längspfad des Signalform-Filters.

Die Schaltvorrichtung ist angeschlossen, um wahlweise die erste Anzapfung (und ggf. weitere Anzapfungen) der Wicklungen mit den ersten Kondensatoren zu einem Tiefpass zusammen zu verbinden, oder zumindest die Wicklungen innerhalb der elektrischen Maschine untereinander zu verbinden (d.h. die Enden einer Seite der Wicklungen) . Bei der Verbindung der Wicklungen der elektrischen Maschine untereinander ergibt sich vorzugsweise eine Drehstrom-Statorwicklung der elektrischen Maschine, die eingerichtet ist, ein Drehfeld innerhalb der elektrischen Maschine zu erzeugen, etwa um die elektrische Maschine als Elektromotor oder als elektrischer Generator zu betreiben. Die Wicklungen werden durch die Schaltvorrichtung insbesondere im Sternpunkt verbunden. Abhängig von dem Schaltzustand der Schaltvorrichtung wird daher der Sternpunkt aufgelöst (nämlich wenn die Anzapfungen mit den Kondensatoren verbunden sind) oder die Wicklungen werden zum Sternpunkt zusammengeschaltet (nämlich wenn die Kondensatoren von den Anzapfungen getrennt sind). Es ergibt sich bei der Verbindung der Wicklungen untereinander eine Sternkonfiguration für die elektrische Maschine. Hierbei umfassen Wicklungen beispielsweise insgesamt drei oder mehr (insbesondere ein ganzzahliges Vielfaches von drei) Wicklungen.

Die Wicklungen der elektrischen Maschine werden zueinander symmetrisch geschaltet. Dies trifft auch für die ersten (bzw. zweiten oder weiteren) Anzapfungen sowie für die ersten (bzw. zweiten oder weiteren) Kondensatoren zu.

Der DC/AC-Wandler kann wie erwähnt auch zweiteilig ausgeführt sein, insbesondere mittels zweier (teilweise oder vollständig steuerbarer) Brücken, insbesondere B6C-Brücken, wobei die Wicklungen zwischen diesen beiden Brücken angeschlossen sind, beispielsweise um eine höhere Betriebsspannung für die elektrische Maschine zu ermöglichen. Der hier verwendete Begriff "Wechselspannungsseite", an die die Wicklungen angeschlossen sind, betrifft die Wechselspannungsseite derjenigen Brücke, die dem Extern-Wechselspannungsanschluss entgegengesetzt ist. Es kann ein (ein- oder mehrphasiger) Brücken-Trennschalter für die andere Brücke (welche an den Extern-Wechselspannungsanschluss angeschlossen ist) vorgesehen sein, der vorzugsweise offen ist, wenn sich die Leistungsschaltung im Filterzustand befindet, und der vorzugsweise geschlossen ist, wenn sich die Leistungsschaltung im Maschinenmodus befindet.

Die Schaltvorrichtung kann mindestens einen Umschalter aufweisen, über den die zumindest eine erste Wicklung wahlweise mit dem mindestens einen ersten Kondensator oder mit der zumindest einen zweiten Wicklung der elektrischen Maschine verbunden ist. Im erstgenannten Fall hat der Umschalter eine Position, bei der die Wicklungen innerhalb des Signalform-Filters arbeitet ("Filterzustand") und folglich mit den Kondensatoren verbunden sind. In der zweiten Position verbindet der Umschalter die Wicklungen derart, dass sich eine Drehstromwicklung ergibt ("Maschinenzustand"). Insbesondere ergibt sich hierbei eine mehrphasige Statorwicklung bzw. eine Wicklungsordnung, die zur Erzeugung eines magnetischen Drehfelds ausgestaltet ist.

Weiterhin kann die Schaltvorrichtung Kondensator-Trennschalter aufweisen. Diese können Teil des Umschalters sein. Über die Kondensator-Trennschalter sind die Kondensatoren mit den Anzapfungen oder Enden Wicklungen verbunden. Zur Vereinfachung soll hierin der Begriff "Anzapfungen" die Anzapfungen zwischen den Enden der Wicklungen bedeuten, sowie für die Enden der Wicklungen stehen. Der Kondensator-Trennschalter ist insbesondere in Reihe mit dem Kondensator geschaltet, sodass der Kondensator nach Bedarf, d.h. wenn die Wicklungen innerhalb des Signalform-Filters als Filterkomponente arbeiten soll ("Filterzustand"), die Kondensatoren mit den Wicklungen verbindet, und ansonsten die Kondensatoren abtrennt, insbesondere wenn die Wicklungen innerhalb der elektrischen Maschine arbeitet ("Maschinenzustand").

Die Umschalter bzw. die Kondensator-Trennschalter sind vorzugsweise symmetrisch bzw. bilden eine mehrphasige Schalteinheit, sodass als Schalter (Umschalter oder Trennschalter) nicht notwendigerweise nur ein Einzelschaltelement bezeichnet wird, sondern auch eine Gruppe von Schaltelementen, die in einem Drehstromsystem vorgesehen sind.

Weiterhin kann die Schaltvorrichtung mindestens einen Sternpunkt-Trennschalter aufweisen. Dieser kann Teil des Umschalters sein. Über den Sternpunkt-Trennschalter sind die Wicklungen der elektrischen Maschine miteinander verbunden. Auch die Sternpunkt-Trennschalter können als mehrphasige Schalteinheit ausgestaltet sein, insbesondere symmetrisch zum Sternpunkt der elektrischen Maschine, an dem sich Enden aller Wicklungen treffen, wenn die elektrische Maschine als solche betrieben wird.

Die Wicklungen bzw. deren Abschnitte und die Kondensatoren bilden gemäß einer Ausführungsform einen T-Filter. In dem Querpfad des T-Filters befinden sich die Kondensatoren. Die beiden Längspfade des T-Filters, die sich vom Querpfad weg erstrecken, werden von den Abschnitten der Wicklungen gebildet, die sich von der Anzapfung weg erstrecken.

Es können daher zwei Abschnitte der Wicklungen zusammen mit den Kondensatoren oder die mindestens eine erste Wicklung und mindestens eine zweite Wicklung der elektrischen Maschine zusammen mit den Kondensatoren einen T-Filter bilden. In dem Querpfad des T-Filters befinden die Kondensatoren. Die zwei Abschnitte der mindestens einen Wicklung bilden die beiden Längspfade des Filters. Die Wicklungen sind an unterschiedlichen Orten der elektrischen Maschine vorgesehen, insbesondere an unterschiedlichen Winkelpositionen. Dies trifft auch für die Abschnitte zu.

Es sei bemerkt, dass die Funktion "zur Erzeugung eines magnetisches Drehfelds" vereinfacht ist und lediglich den Motorbetrieb der elektrischen Maschine darstellt; allgemein wird die Funktion der Wicklung innerhalb der elektrischen Maschine sowohl als Motor, als auch als Generator hierdurch bezeichnet.

Die Enden einer Seite der Wicklungen sind mit der Wechselspannungsseite des DC/AC-Wandlers verbunden, wobei die Kondensatoren an den Anzapfungen bzw. an dem Ende der Wicklung angeschlossen sind, welches entgegengesetzt zu dem Ende ist, welches (direkt) mit der Wechselstromseite des DC/AC-Wandlers verbunden ist.

Weiterhin kann vorgesehen sein, dass der DC/AC-Wandler bidirektional ausgebildet ist. Daher kann der DC/AC-Wandler eine Gleichstromseite aufweisen, die als Eingang und auch als Ausgang dient, während die Wechselstromseite auch als Ausgang oder Eingang dienen kann. Dadurch ist es möglich, dass der DC/AC-Wandler in beide Richtungen Leistungen überträgt, insbesondere um gleichermaßen einen Ladevorgang wie eine Rückspeisung aus dem Fahrzeug ins Versorgungsnetz zu ermöglichen. Der DC/AC-Wandler ist wie erwähnt vorzugsweise als mehrphasige, vollständig oder zumindest teilweise schaltbare Brücke ausgestaltet, insbesondere als B6C-Brücke. Der DC/AC-Wandler ist insbesondere als Vollwellenbrücke ausgestaltet, wobei beide Schaltelemente eines Zweigs oder nur ein Schaltelement dieses Zweigs gesteuert ist (während das andere Schaltelement als Iode ausgebildet ist).

Als Schaltelemente des DC/AC-Wandlers kommen insbesondere Halbleiterschalter infrage, insbesondere Transistoren oder Thyristoren, vorzugsweise Feldeffekttransistoren, insbesondere MOSFETs, oder auch IGBTs. Wie erwähnt kann der DC/AC-Wandler auch zweiteilig ausgebildet sein, um die Wicklungen der elektrischen Maschine (im Maschinenzustand) zwischen beiden Teilen des DC/AC-Wandlers anzuschließen. Im Filterzustand wird der Teil des DC/AC-Wandlers, der auf der Seite des Extern-Wechselstromanschlusses angeschlossen ist, deaktiviert oder mittels eines Brücken-Trennschalters abgetrennt.

Die Leistungsschaltung kann ferner eine Steuereinrichtung aufweisen. Diese ist eingerichtet, die Schaltvorrichtung wahlweise in einen Filterzustand und in einen Maschinenzustand zu versetzen. Hierzu hat die Schaltvorrichtung vorzugsweise einen Eingang, der mit einem Steuerausgang der Steuereinrichtung verbunden ist. Die Steuereinrichtung kann selbst auch einen Eingang aufweisen, etwa zum Anschluss eines übergeordneten Steuergerätes, um den Zustand vorzugeben. Die Steuereinrichtung ist vorzugsweise teilweise oder vollständig als Prozessor ausgebildet, der mit einem Programmspeicher verbunden ist, auf dem ein Programm zur Einstellung und zur Definition der Zustände hinterlegt ist. Das Programm im Programmspeicher ist ausgebildet, von dem Prozessor verarbeitet werden zu können.

Die Schaltvorrichtung kann von der Steuereinrichtung wahlweise in den Filterzustand oder in den Maschinenzustand versetzt werden. Im Filterzustand steuert die Steuereinrichtung die Schaltvorrichtung derart an, dass diese die Wicklungen innerhalb des Signalform-Filters mit den Kondensatoren zu einem Tiefpass mindestens dritter Ordnung verbindet.

Im Maschinenzustand steuert die Steuereinrichtung die Schaltvorrichtung derart an, dass diese die Wicklungen der elektrischen Maschine zu einer Drehstrom-Statorwicklung verbindet. Zu den Wicklungen der elektrischen Maschine gehören insbesondere die mindestens erste Wicklung und die mindestens zweite Wicklung. Hierbei werden die Wicklungen der elektrischen Maschine insbesondere an einem Sternpunkt der Drehstrom-Statorwicklung miteinander verbunden.

Vorzugsweise ist der Signalform-Filter dreiphasig ausgebildet. Dies gilt insbesondere auch für den Extern-Wechselstromanschluss. Zudem ist der DC/AC-Wandler ein- oder mehrphasig ausgebildet, vorzugsweise mit einer Phasenanzahl, die an die Phasenanzahl der elektrischen Maschine angepasst ist. Dies gilt insbesondere für die Wechselspannungsseite des DC/AC-Wandlers; für die Gleichstromseite des DC/AC-Wandlers erübrigt sich eine Phasenbetrachtung. Ferner können die hier genannten Schalter, Kondensatoren und Spulen als mehrphasige Einheit ausgebildet sein, wobei deren Anzahl der Phasen vorzugsweise der Anzahl der Phasen des Signalform-Filters, insbesondere der Anzahl der Phasen des Extern-Wechselstromanschlusses, entspricht.

Der Extern-Wechselstromanschluss kann gemäß der Norm IEC62196 ausgebildet sein. Der Extern-Wechselstromanschluss kann insbesondere als Plug-In-Steckverbindungselement ausgebildet sein, vorzugsweise nach der genannten Norm oder auch gemäß einem weiteren Standard. Mit anderen Worten kann der Extern- Wechselstromanschluss als genormter Plug-In-Anschluss vorgesehen sein. Der Extern-Wechselstromanschluss ist insbesondere dreiphasig und als Steckkontaktanordnung ausgeprägt. Der Extern-Wechselstromanschluss befindet sich insbesondere an einer Außenhülle des Fahrzeugs, beispielsweise in einer Vertiefung, die vorzugsweise mit einer Klappe geschlossen werden kann.

Die Leistungsschaltung kann wie erwähnt zweite oder weitere Kondensatoren aufweisen. Diese sind mit zweiten oder weiteren Anzapfungen der Wicklungen schaltbar verbunden. Die ersten Kondensatoren können eine Gruppe bzw. eine mehrphasige Einheit bilden. Die zweiten bzw. weiteren Kondensatoren können ebenso eine Gruppe bilden, die sich jedoch von der Gruppe der ersten Kondensatoren unterscheidet (insbesondere keine Schnittmenge mit dieser bildet).

Die Stelle der Anzapfungen innerhalb der Wicklungen definiert die Induktivität der Abschnitte. Daher können die Längen der Abschnitte gemäß einer gewünschten Filterwirkung ausgestaltet sein, etwa ein möglichst geringer Klirrfaktor für die Grundwelle, die möglichst starke Dämpfung eines bestimmten Frequenzbereichs und/oder die möglichst geringe Durchlassdämpfung für einen anderen bestimmten Frequenzbereich (in dem beispielsweise die Grundfrequenz liegt).

Die ersten Anzapfungen können die Wicklungen jeweils in Abschnitte unterschiedlicher Induktivität unterteilen. Somit befinden sich die Anzapfungen nicht notwendigerweise in der Mitte der Wicklungen, sondern können auch von der Mitte entfernt liegen. Dadurch können erste Abschnitte der Wicklungen zusammen mit den daran angeschlossenen Kondensatoren eine Filterstufe mit einer ersten Grenzfrequenz bilden und zweite oder weitere Abschnitte der Wicklungen zusammen mit den daran angeschlossenen Kondensatoren eine zweite Filterstufe mit einer zweiten Grenzfrequenz bilden, die von der ersten Grenzfrequenz abweicht. Es können auch zwei Filterstufen mit unterschiedlichem Zweck vorgesehen werden; eine erste Filterstufe zur Sinussignal-Formung und eine zweite Filterstufe zum Herausfiltern eines bestimmten Stör-Frequenzbereichs (etwa betreffend eine Oberwelle bestimmter Ordnung, deren Leistung besonders stark ist).

Erste und ggf. zweite oder weitere Anzapfungen sind jeweils vorzugsweise an der gleichen Stelle der verschiedenen Wicklungen angeordnet. Die erste Anzapfung einer Wicklung befindet sich an einer Stelle, der der ersten Anzapfung einer weiteren Wicklung entspricht. Mit "Stelle" wird hierbei insbesondere eine Position bezogen auf eine Seite bzw. Ende der Wicklungen bezeichnet und kann durch einen Abstand von einem Ende der Wicklungen (der gleichen Seite) definiert werden.

Ferner kann der der Signalform-Filter eingerichtet sein, aus einer Rechteckwelle, die eine Grundfrequenz von 40 Hz - 400 Hz und ein Tastverhältnis von 50% aufweist, ein Signal mit einem Grundwellenleistungsanteil von mindestens 75 %, 85 %, 95 % oder 98 % an der gesamten Leistung zu filtern. Dies kann durch geeignete Wahl der Filterfunktion und somit der Kapazitätswerten der Kondensatoren bzw. durch geeignete Wahl der Länge der Abschnitte, welche von den Anzapfungen definiert werden, erreicht werden.

Weiterhin können die Kondensatoren jeweils einen Kondensator-Trennschalter aufweisen. Über diesen Schalter ist jeder der Kondensatoren mit der betreffenden Anzapfung verbunden. Der Kondensator ist daher schaltbar. Der Trennschalter ist geschlossen im Filtermodus, um auszufilternde Signalkomponenten abzuleiten und ist im Maschinenmodus geöffnet, um die elektrische Maschine im Betrieb nicht reaktiv zu belasten.

Der DC/AC-Wandler kann bidirektional ausgebildet sein. Falls der DC/AC-Wandler unidirektional ausgebildet ist, dann vorzugsweise von der Gleichspannungsseite zur Wechselspannungsseite hin.

Die Leistungsschaltung kann ferner eine Sternpunkt-Trennvorrichtung mit Sternpunkt-Trennschaltern aufweisen. Die Enden der Wicklungen der elektrischen Maschine sind schaltbar miteinander zu einem Sternpunkt verbindbar. Die Sternpunkt-Trennvorrichtung und die Kondensator-Trennschalter arbeiten wechselweise, so dass beide Schalterarten zusammen in funktioneller Sicht einen Umschalter bilden. Die Sternpunkt-Trennvorrichtung kann ferner in funktioneller Sicht Teil eines Umschalters sein, der bei geöffneter Sternpunkt-Trennvorrichtung die Wicklungen mit dem Extern-Wechselstromanschluss verbindet.

Die Leistungsschaltung kann ferner eine Steuereinrichtung aufweisen, die eingerichtet ist, die Schaltvorrichtung, insbesondere die Kondensator-Trennschalter und die Sternpunkt-Trennvorrichtung oder mit anderen Worten die dadurch gebildeten Umschalter wahlweise in einen Filterzustand und einen Maschinenzustand zu versetzen.

Im Filterzustand steuert die Steuereinrichtung die Sternpunkt-Trennvorrichtung gemäß einem offenen Schaltzustand an und steuert die Schaltvorrichtung gemäß einem geschlossenen Schaltzustand an. Dies wird durch ein von der Steuereinrichtung erzeugtes Steuersignal erreicht sowie durch die Ausgestaltung der betreffenden Schalter bzw. Schaltvorrichtung. Es ergibt sich, dass durch diese Schaltzustände die Wicklungen mit den Kondensatoren zu einem Tiefpass mindestens dritter Ordnung verbunden sind.

Im Maschinenzustand steuert die Steuereinrichtung die Sternpunkt-Trennvorrichtung gemäß einem geschlossenen Schaltzustand an und die Schaltvorrichtung der Kondensatoren (d.h. die Kondensator-Trennschalter) gemäß einem offenen Schaltzustand an. Durch die Schaltzustände im Maschinenzustand sind die Wicklungen zu einer Drehstrom-Statorwicklung geschaltet.

Dem Extern-Wechselspannungsanschluss kann ein EMV-Filter vorgeschaltet sein. Das EMV-Filter verbindet die Wicklungen der elektrischen Maschine mit dem Extern-Wechselspannungsanschluss. Die Grenzfrequenz des EMV-Filter liegt über einer Grenzfrequenz des Signalform-Filters. Falls daher besonders hohe Anforderungen an die Signalqualität gestellt sind, kann ein EMV-Filter dem Signalform-Filter nachgeschaltet sein. Dadurch können ggf. vorhandene hochfrequente Komponenten des Signals, das von dem Signalform-Filter stammt, herausgefiltert werden.

Wie erwähnt kann der Extern-Wechselstromanschluss (220) gemäß einem Standard für elektrische Kupplungen von Plug-In-Fahrzeugen ausgebildet sein, insbesondere gemäß dem Standard IEC 62196.

### Kurzbeschreibung der Figuren

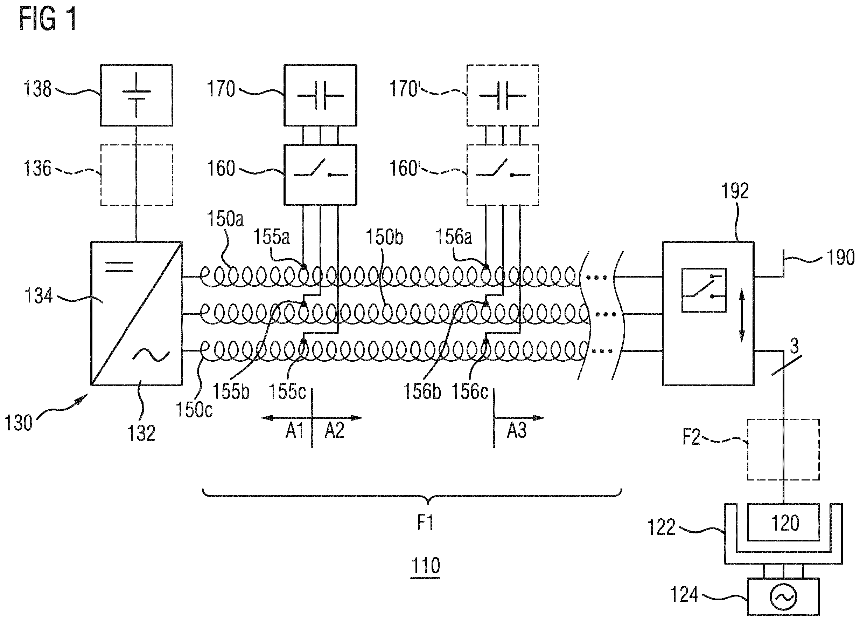

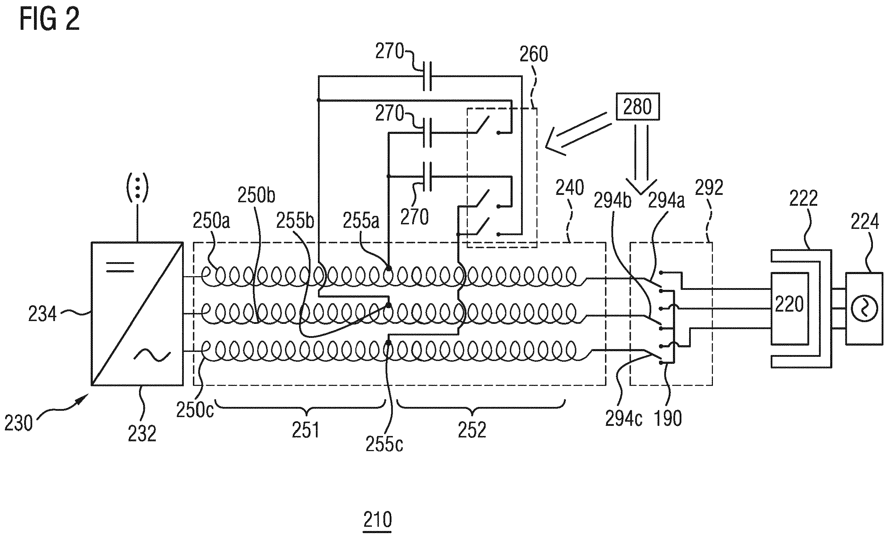

Die Figuren 1 und 2 zeigen mögliche Filterkonfigurationen einer Leistungsschaltung.

Die Fig. 1 zeigt eine Leistungsschaltung 110 mit einem Extern-Wechselspannungsanschluss 120 (symbolisch dargestellt) sowie mit einem DC/AC-Wandler 130, der eine Wechselspannungsseite 132 aufweist. Von einer elektrischen Maschine 110 sind lediglich die Wicklungen 150a-150c dargestellt, welche zusammen eine Statorwicklung bilden. Eine Schaltvorrichtung 160, 192 ist an die Wicklungen 150a-c angeschlossen ist.

In der Fig. 1 ist die Schaltvorrichtung zweiteilig dargestellt und umfasst einen dreiphasigen Umschalter 192 sowie einen dreiphasigen Kondensator- Trennschalter 160. Zusammen bilden der Umschalter und der Kondensator-Trennschalter die Schaltvorrichtung. Es ist ferner ein optionaler weiterer dreiphasigen Kondensator-Trennschalter 160' dargestellt, der ebenso Teil der Schaltvorrichtung sein kann.

Die Wicklungen weisen Anzapfungen 155 a - c auf, zwischen denen einerseits und der Wechselspannungsseite andererseits für jede Wicklung die gleiche Induktivität (definiert durch den betreffenden Wicklungsabschnitt) besteht. Der dreiphasige Kondensatortrennschalter 160 verbindet schaltbar diese Anzapfungen 155 a - c mit den dreiphasigen Kondensator 170.

Innerhalb des Signalformfilters F1 bildet somit der Abschnitt zwischen den ersten Anzapfungen 155 a - c und dem Ende der Wicklungen, das an die Wechselspannungsseite 132 angrenzt, eine (dreiphasige) Induktivität. Diese Induktivität ist in einem Längspfad des Filters F1, wobei sich in einem Querpfad bei geschlossenen Trennschalter 160 der dreiphasige Kondensator 170 befindet. Neben den Abschnitt A1 zwischen dem Ende der Wicklungen, das an die Wechselspannungsseite 132 angrenzt, und den Anzapfungen 155 a - c umfasst der Filter F1 ferner einen Abschnitt A2 der Wicklungen 150 a - c. Dieser Abschnitt A2 kann zu den Anzapfungen 155 a - c bis zum Umschalter 192 reichen. Es ergibt sich ein T-Filter, bei dem der zweite Längspfad durch den zweiten Abschnitt A2 der Wicklungen 155 a - c gebildet wird.

Ferner ist in der Figur 1 die Möglichkeit dargestellt, dass zweite Anzapfungen 156 a - c bestehen. Diese würden die Wicklungen 155 a - c in einen weiteren Abschnitt A3 (neben den Abschnitten A1 und A2) verteilen. Auch an diesen zweiten Anzapfungen 156 a - c ist über ein Trennschalter 160' (mehrphasig) ein Kondensator 170' (mehrphasig) angeschlossen.

Zur vereinfachten Darstellung ist der Trennschalter 160' und der Kondensator 170' dreiphasig dargestellt; bei einer tatsächlichen Realisierung kann der dreiphasige Trennschalter 160' und der dreiphasige Kondensator 170' durch zweite Kondensator-Trennschalter bzw. zweite Kondensatoren realisiert werden, wie es etwa in der Figur 2 dargestellt ist.

Der Filter F1 kann ferner weitere Abschnitte aufweisen, die durch die Anzapfungen definiert sind, wobei sich zu beiden Seiten der Anzapfungen unterschiedliche Abschnitte befinden. Diese Anzapfungen trennen die Wicklung der elektrischen Maschine in mehrere Einzelinduktivitäten auf und geben ferner die Möglichkeit, einen Kondensator (dreiphasig) an diese Induktivitäten einzeln hinzuzuschalten, wodurch sich einzelne Filterstufen ergeben. Je nach Betrachtungsweise sind diese Filterstufen LC-Filterstufen oder auch als T-Filter zu betrachten, an welche ein Querzweig in Form eines (dreiphasigen) Kondensators hinzugefügt wird.

An dem Ende der Wicklungen, das der Wechselspannungsseite 132 entgegengesetzt ist, befindet sich eine Umschaltvorrichtung 192 die, wie dargestellt, zwei Positionen aufweist. In einer ersten Position sind die Wicklungsenden zusammengeschlossen und bilden einen Sternpunkt 190. In einer zweiten, sich davon unterscheidenden Position sind die Wicklungsenden aufgetrennt und einzeln mit dem Wechselspannungsanschluss 120 verbunden. Zwischen dem Umschalter 192 und dem externen-Wechselspannungsanschluss 120 ist eine dreiphasige Leitung dargestellt, wobei dies mit der Ziffer 3 und dem Querstrich wiedergegeben ist. Ferner ist der Sternpunkt 190 nur zur besseren Darstellung herausgeführt dargestellt.

Ferner sind die Kondensatoren in Dreieckschaltung an die Wicklungen 150 a - c (über die Anzapfung) angeschlossen. In einer alternativen Ausführungsform können die Kondensatoren auch in Dreiecksschaltungen konfiguriert sein.

Ein elektrisches Verbindungselement 122 (stationär) dient zum Anschluss des Extern-Wechselspannungsanschlusses an ein Wechselspannungsnetz bzw. Versorgungsnetz 124, etwa um über den Wandler 130 und den Filter F1 elektrische Energie in das Versorgungsnetz 124 zu speisen. Es ist ferner symbolisch dargestellt, dass der Extern-Wechselspannungsanschluss 120 und das stationäre Verbindungselement 122 eine Steckverbindung bilden.

Falls erforderlich kann ein EMV-Filter F2 vorgesehen sein, der sich zwischen dem Umschalter 192 und dem externen-Wechselspannungsanschluss 120 befindet. Dieser EMV-Filter F2 kann dazu eingerichtet sein, etwaige Hochfrequenzkomponenten aus dem Leistungssignal herauszufiltern, ehe dieses in das Netz 124 eingespeist wird.

Der Umschalter 192 hat wie dargestellt zwei Positionen, wobei die erste Position (Sternpunktkonfiguration) im Motormodus gewählt wird und im Filtermodus die Enden der Wicklung 150 a - c aufgetrennt sind und mit dem Extern-Wechselspannungsanschluss verbunden sind. Jedoch werden auch die Schalter 160 bzw. 160' synchron zu der Schaltstellung des Umschalters 192 eingestellt. Insbesondere sind die Trennschalter 160, 160' geschlossen, wenn der Umschalter 192 die Wicklungen 150 a - c mit dem Extern-Wechselspannungsanschluss 120 verbindet; während die Trennschalter 160, 160' offen sind, wenn der Umschalter 192 die Wicklungsenden (entgegengesetzt zur Wechselstromseite) miteinander verbindet.

In der Figur 1 ist der Maschinenzustand dargestellt, in den die Trennschalter geöffnet sind und die Wicklungen zu der Sternkonfiguration (mit dem Sternpunkt 190) verbunden sind. Im Filterzustand wären die Zustände negiert zu den dargestellten Zuständen, so dass über die Trennschalter 160 die Kondensatoren 170 an die Wicklungen 150 a - c angeschlossen wären und der Umschalter die Wicklungsenden mit dem externen-Wechselstromanschluss verbinden würde.

Da die Schaltzustände der Trennschalter 160, 160' synchron zu den Zuständen des Umschalters 192 sind bzw. verändert werden, können die Schalter 160, 160' und 192 als Umschaltereinheit realisiert sein, das zwei Schaltzustände aufweist, welche den Filterzustand bzw. den Maschinenzustand entsprechen.

Der AC/DC-Wandler 130 weist eine Gleichspannungsseite 134 auf und ist eingerichtet, Energie zwischen der Wechselspannungsseite 132 und der Gleichspannungsseite 134 zu wandeln. An die Gleichspannungsseite 134 ist (ggf. über ein Steuerungsmodul 136 oder ein an dieser Stelle befindlicher DCDC-Wandler) eine wiederaufladbare Fahrzeugbatterie 138 angeschlossen, die beispielsweise zur Traktion und/oder zur Versorgung der elektrischen Maschine dient. Die elektrische Maschine ist in Figur 1 durch die Wicklungen 150 a - c wiedergegeben, wobei es sich um eine zur Traktion dienende elektrische Maschine eines Fahrzeugs handeln kann oder etwa um eine elektrische Maschine eines Nebenaggregats, etwa eines elektrischen Klimakompressors. An der Stelle des Bezugszeichens 136 kann wie erwähnt auch ein DCDC-Wandler vorgesehen sein, um Unterschiede der Betriebsspannung zwischen der Gleichspannungsseite 134 und der Batterie 138 auszugleichen und/oder die Leistung von oder zum DC/AC-Wandler zu steuern. Der DC/DC-Wandler 136 kann daher auch zur Leistungssteuerung verwendet werden.

Die Figur 2 zeigt eine Leistungsschaltung 210 mit einem DC/AC-Wandler 230, der eine Wechselstromseite 232 aufweist. Eine elektrische Maschine 240 weist Wicklungen 250 a - c auf. Die Wicklungen 250 a - c sind in Abschnitt 251 und 252 aufgeteilt, die beispielsweise in Abschnitten A1 - A3 der Figur 1 entsprechen können.

Die Wicklungen 250 a - c weisen ferner Anzapfungen 255 a - c auf. Diese sind über Kondensator-Trennschalter 260 mit Kondensatoren 270 verbunden. Die Kondensatoren 270 können zusammen auch als dreiphasiger Kondensator aufgefasst werden, während die Trennschalter 260 zusammen auch als dreiphasiger Trennschalter betrachtet werden können.

Es ergibt sich bei geschlossenen Trennschalter 260 eine Dreieckskonfiguration für die Kondensatoren 270, die an die Anzapfungen 255 a - c angeschlossen sind. Die Trennschalter 260 sind in geöffneten Zustand dargestellt, welches dem Maschinenzustand entspricht. An dem Ende der Wicklungen 250 a - c welches der Wechselspannungsseite 232 entgegengesetzt ist, befindet sich ein Umschalter 292, der mittels Umschalterelementen 294 a - c (welche zusammen auch als dreiphasiger Umschalter 292 betrachtet werden können) die Wicklungen 250 a - c in Sternkonfiguration miteinander verbindet oder die an den Umschalter 292 angeschlossenen Enden nicht miteinander verbindet, sondern einzeln mit einem externen-Wechselspannungsanschluss 220 verbindet.

Der Umschalter 292 ist im Maschinenzustand dargestellt, bei dem die einzelnen Umschaltelemente 294 a - c die jeweiligen Wicklungsenden miteinander verbinden, insbesondere mit dem Sternpunkt 290. In der Figur 2 ist der Sternpunkt 290 zur besseren Darstellbarkeit als Verbindungsschaltung wiedergegeben, kann jedoch auch einer direkten Verbindung entsprechen.

Der externe-Wechselspannungsanschluss 220 ist in ein elektrisches Verbindungselement 222 (stationär) eines Versorgungsnetzes 224 eingesteckt.

Eine Steuerung 280 steuert die Schaltzustände der Trennschalter 260 bzw. des Umschalters 292, insbesondere in synchroner Weise. "Synchron" bedeutet hier, dass alle Schaltzustände im Wesentlichen gleichzeitig geändert werden, falls ein Schaltvorgang auftritt. Die Steuereinrichtung 280 kann ferner einen Eingang aufweisen, um Befehle zu empfangen, die den einzustellenden Zustand definieren. Der Schalter 260 und der Umschalter 292 können zusammen als Schaltvorrichtung betrachtet werden, da diese gemäß den gleichen Schaltsignalen schalten und funktionell zusammengehören, und da sie einen Filterzustand oder einen Maschinenzustand darstellen.

Der Signalformfilter wird in der Leistungsschaltung 210 gebildet von den Abschnitten 251 und 252, die sich zu beiden Seiten der Anzapfungen 255 a - c erstrecken. Diese Abschnitte betreffen die Wicklungen 250 a - c, wobei für ihre Wicklung der Abschnitt 251 gleich groß ist und der Abschnitt 252 gleich groß ist. Jedoch können sich die Längen der Abschnitte 251 von den Längen der Abschnitte 252 unterscheiden. Die beiden Abschnitte 251 und 252 bilden jeweils dreiphasige Induktivitäten im Sinne von Längspfaden eines T-Filters. Die dreiphasige Kapazität des T-Filters wird gebildet von den Kondensatoren 270, die über die Trennschalter 260 an die Anzapfungen 255 a - c angeschlossen sind.

Da drei energiespeichernde Bauelemente verwendet werden (d. h. Induktivität des Abschnitts 251, Induktivität des Abschnitt 252 und Kapazität der Kondensatoren 270), ergibt sich ein Tiefpass dritter Ordnung für Signale, die von dem AC/DC-Wandler an den Extern-Wechselspannungsanschluss 220 übertragen werden. Wie aus Figur 1 ersichtlich, können die Wicklungen 250 a - c mit weiteren Anzapfungen, d. h. in einer zweiten Gruppe, dritten Gruppe oder weiteren Gruppe von Anzapfungen versehen werden, um so weitere Längspfade eines mehrstufigen Tiefpassfilters zu realisieren. Hierbei würde jede Anzapfung wie die in Figur 2 und 1 dargestellt mit einer Kapazität verbunden werden, welche den Querpfad bildet.

## Patentansprüche

1. Fahrzeugseitige Leistungsschaltung (210) zur Stromversorgung in einem elektrisch angetriebenen Fahrzeug, wobei die Leistungsschaltung (210) umfasst:
- einen Extern-Wechselspannungsanschluss (220);
- mindestens eine DC/AC-Wandler (230), der eine Wechselspannungsseite (232) aufweist; und
- eine elektrische Maschine (240) mit mehreren Wicklungen, die jeweils eine erste Anzapfung (150a-c) aufweisen,
wobei die elektrische Maschine (240) an der Wechselspannungsseite (232) des DC/AC-Wandlers (230) angeschlossen ist; **gekennzeichnet durch**
- eine Schaltvorrichtung (260, 292), die an die mehreren Wicklungen angeschlossen ist, und
- einen Signalform-Filter (F1) mit mehreren ersten Kondensatoren (270), wobei der Signalform-Filter (F1) zwischen dem DC/AC-Wandler (230) und einem Extern-Wechselstromanschluss (220) angeschlossen ist, und wobei ferner die Schaltvorrichtung (260, 292) einen Umschalter aufweist, über den die zumindest eine erste Wicklung wahlweise, in einem Filterzustand des Umschalters entsprechend einer ersten Position des Umschalters, mit dem mindestens einen ersten Kondensator oder, in einem Maschinenzustand des Umschalters entsprechend einer zweiten Position des Umschalters, mit der zumindest einen zweiten Wicklung der elektrischen Maschine verbunden ist und wobei die Schaltvorrichtung somit wahlweise:
- die Wicklungen innerhalb der elektrischen Maschine (240) untereinander verbindet; oder
- die ersten Anzapfungen (255a-c) der mehreren Wicklungen (250a-c) innerhalb des Signalform-Filters (F1) mit den mehreren ersten Kondensatoren (270) zu einem Tiefpass mindestens dritter Ordnung verbindet.

2. Fahrzeugseitige Leistungsschaltung (110) nach Anspruch 1, die ferner zweite oder weitere Kondensatoren (170') aufweist, die mit zweiten oder weiteren Anzapfungen (156a-c) der Wicklungen (150 a-c) schaltbar verbunden sind.

3. Fahrzeugseitige Leistungsschaltung (110) nach Anspruch 1 oder 2, wobei die ersten Anzapfungen (155a-c) die Wicklungen (150a-c) jeweils in Abschnitte (A1, A2) unterschiedlicher Induktivität unterteilen.

4. Fahrzeugseitige Leistungsschaltung (210) nach einem der vorangehenden Ansprüche, wobei der Signalform-Filter (F1) eingerichtet ist, aus einer Rechteckwelle, die eine Grundfrequenz von 40 Hz - 400 Hz und ein Tastverhältnis von 50% aufweist, ein Signal mit einem Grundwellenleistungsanteil von mindestens 75 %, 85 %, 95 % oder 98 % an der gesamten Leistung zu filtern.

5. Fahrzeugseitige Leistungsschaltung (210) nach einem der vorangehenden Ansprüche, wobei die Kondensatoren (270) jeweils einen Kondensator-Trennschalter (260) aufweisen, über den die Kondensatoren (270) jeweils mit der betreffenden Anzapfung (255a-c) verbunden ist.

6. Fahrzeugseitige Leistungsschaltung (10) nach einem der vorangehenden Ansprüche, wobei der DC/AC-Wandler (30= bidirektional ausgebildet ist.

7. Fahrzeugseitige Leistungsschaltung (210) nach einem der vorangehenden Ansprüche, wobei die Leistungsschaltung (210) ferner eine Sternpunkt-Trennvorrichtung (292) mit Sternpunkt-Trennschaltern (294a-c) aufweist, wobei über die Sternpunkt-Trennvorrichtung (292) Enden der Wicklungen (250a-c) der elektrischen Maschine (240) zu einem Sternpunkt (290) schaltbar miteinander verbunden sind.

8. Fahrzeugseitige Leistungsschaltung (210) nach Anspruch 7, die ferner eine Steuereinrichtung (280) aufweist, die eingerichtet ist, die Schaltvorrichtung (260) und die Sternpunkt-Trennvorrichtung (292) wahlweise in einen Filterzustand und einen Maschinenzustand zu versetzen, wobei
- im Filterzustand die Steuereinrichtung (280) die Sternpunkt-Trennvorrichtung (292) gemäß einem offenen Schaltzustand ansteuert und die Schaltvorrichtung (260) gemäß einem geschlossenen Schaltzustand ansteuert, so dass die Wicklungen (250a-c) mit den Kondensatoren (270; 72) zu einem Tiefpass mindestens dritter Ordnung verbunden sind; und
- im Maschinenzustand die Steuereinrichtung (280) die Sternpunkt-Trennvorrichtung (292) gemäß einem geschlossenen Schaltzustand ansteuert und die Schaltvorrichtung (260) gemäß einem offenen Schaltzustand ansteuert, so dass die Wicklungen (250a-c) zu einer Drehstrom-Statorwicklung verbunden sind.

9. Fahrzeugseitige Leistungsschaltung (10) nach einem der vorangehenden Ansprüche, wobei dem einen Extern-Wechselspannungsanschluss (220) ein EMV-Filter (F2) vorgeschaltet ist, dessen Grenzfrequenz über einer Grenzfrequenz des Signalform-Filters (F1) liegt.

10. Fahrzeugseitige Leistungsschaltung (10) nach einem der vorangehenden Ansprüche, wobei der Extern-Wechselstromanschluss (220) gemäß IEC 62196 ausgebildet ist.

## Claims

1. Vehicle-side power circuit (210) for supplying power in an electrically driven vehicle, wherein the power circuit (210) comprises:
- an external AC voltage terminal (220);
- at least one DC/AC converter (230) having an AC voltage side (232); and
- an electrical machine (240) having a plurality of windings, each of which has a first tapping (150a-c), wherein the electrical machine (240) is connected to the AC voltage side (232) of the DC/AC converter (230); **characterized by**
- a switching device (260, 292) connected to the plurality of windings, and
- a signal shaping filter (F1) having a plurality of first capacitors (270), wherein the signal shaping filter (F1) is connected between the DC/AC converter (230) and an external AC terminal (220), and wherein furthermore the switching device (260, 292) has a changeover switch, via which, in a filter state of the changeover switch corresponding to a first position of the changeover switch, the at least one first winding is optionally connected to the at least one first capacitor or, in a machine state of the changeover switch corresponding to a second position of the changeover switch, to the at least one second winding of the electrical machine and wherein the switching device therefore optionally:
- interconnects the windings within the electrical machine (240); or
- connects the first tappings (255a-c) of the plurality of windings (250a-c) within the signal shaping filter (F1) to the plurality of first capacitors (270) to form an at least third-order low-pass filter.

2. Vehicle-side power circuit (110) according to Claim 1, which furthermore has second or further capacitors (170'), which are connected to second or further tappings (156a-c) of the windings (150 a-c) in a switchable manner.

3. Vehicle-side power circuit (110) according to Claim 1 or 2, wherein the first tappings (155a-c) subdivide the windings (150a-c) in each case into sections (A1, A2) having different inductances.

4. Vehicle-side power circuit (210) according to any of the preceding claims, wherein the signal shaping filter (F1) is configured to filter a signal having a fundamental power proportion of at least 75%, 85%, 95% or 98% of the total power from a rectangular wave having a fundamental frequency of 40 Hz - 400 Hz and a duty ratio of 50%.

5. Vehicle-side power circuit (210) according to any of the preceding claims, wherein the capacitors (270) each have a capacitor disconnecting switch (260), via which the capacitors (270) are respectively connected to the relevant tapping (255a-c).

6. Vehicle-side power circuit (10) according to any of the preceding claims, wherein the DC/AC converter (30) is embodied in a bidirectional fashion.

7. Vehicle-side power circuit (210) according to any of the preceding claims, wherein the power circuit (210) furthermore has a star-point disconnecting device (292) having star-point disconnecting switches (294a-c), wherein via the star-point disconnecting device (292) ends of the windings (250a-c) of the electrical machine (240) are connected to one another in a switchable manner to form a star point (290).

8. Vehicle-side power circuit (210) according to Claim 7, which furthermore has a control unit (280) configured to put the switching device (260) and the star-point disconnecting device (292) optionally into a filter state and a machine state, wherein
- in the filter state the control unit (280) drives the star-point disconnecting device (292) in accordance with an open switching state and drives the switching device (260) in accordance with a closed switching state, such that the windings (250a-c) are connected to the capacitors (270; 72) to form an at least third-order low-pass filter; and
- in the machine state the control unit (280) drives the star-point disconnecting device (292) in accordance with a closed switching state and drives the switching device (260) in accordance with an open switching state, such that the windings (250a-c) are connected to form a three-phase stator winding.

9. Vehicle-side power circuit (10) according to any of the preceding claims, wherein an EMC filter (F2) is connected upstream of the one external AC voltage terminal (220), the cutoff-frequency of said EMC filter lying above a cut-off frequency of the signal shaping filter (F1).

10. Vehicle-side power circuit (10) according to any of the preceding claims, wherein the external AC terminal (220) is embodied in accordance with IEC 62196.

## Revendications

1. Circuit de puissance côté véhicule (210) destiné à l'alimentation en courant d'un véhicule à propulsion électrique, le circuit de puissance (210) comprenant :
- une borne de tension alternative externe (220) ;
- au moins un convertisseur CC/CA (230) qui comporte un côté tension alternative (232) ; et
- une machine électrique (240) ayant une pluralité d'enroulements qui comportent chacun une première prise (150a-c),
la machine électrique (240) étant raccordée au côté tension alternative (232) du convertisseur CC/CA (230) ;
**caractérisé par**
- un dispositif de commutation (260, 292) qui est raccordé à la pluralité d'enroulements, et
- un filtre de forme de signal (F1) comprenant une pluralité de premiers condensateurs (270), le filtre de forme de signal (F1) étant raccordé entre le convertisseur CC/CA (230) et une borne de courant alternatif externe (220), et le dispositif de commutation (260, 292) comportant en outre un commutateur par le biais duquel l'au moins un premier enroulement est relié éventuellement, dans un état de filtre du commutateur correspondant à une première position du commutateur, à l'au moins un premier condensateur ou, dans un état machine du commutateur correspondant à une deuxième position du commutateur, à l'au moins un deuxième enroulement de la machine électrique et le dispositif de commutation reliant ainsi éventuellement :
- les enroulements à l'intérieur de la machine électrique (240) les uns aux autres ; ou
- les premières prises (255a-c) de la pluralité d'enroulements (250a-c) à l'intérieur du filtre de forme de signal (F1) à la pluralité de premiers condensateurs (270) pour former un filtre passe-bas de troisième ordre au moins.

2. Circuit de puissance côté véhicule (110) selon la revendication 1, comprenant en outre des deuxièmes condensateurs (170') ou plus qui sont reliés de manière commutable à des deuxièmes prises (156a-c) ou plus des enroulements (150a-c).

3. Circuit de puissance côté véhicule (110) selon la revendication 1 ou 2, les premières prises (155a-c) divisant chacune les enroulements (150a-c) en portions (A1, A2) d'inductances différentes.

4. Circuit de puissance côté véhicule (210) selon l'une des revendications précédentes, le filtre de forme de signal (F1) étant conçu pour filtrer, d'une onde carrée qui a une fréquence fondamentale de 40 Hz à 400 Hz et un rapport cyclique de 50 %, un signal ayant une composante de puissance d'onde fondamentale d'au moins 75%, 85 %, 95 % ou 98 % de la puissance totale.

5. Circuit de puissance côté véhicule (210) selon l'une des revendications précédentes, les condensateurs (270) comportant chacun un interrupteur d'isolement de condensateur (260) par le biais duquel les condensateurs (270) sont chacun reliés à la prise correspondante (255a-c).

6. Circuit de puissance côté véhicule (10) selon l'une des revendications précédentes, le convertisseur CC/CA (30) étant bidirectionnel.

7. Circuit de puissance côté véhicule (210) selon l'une des revendications précédentes, le circuit de puissance (210) comprenant en outre un dispositif d'isolement point neutre (292) pourvu de commutateurs d'isolement de point neutre (294a-c), des extrémités des enroulements (250a-c) de la machine électrique (240) étant reliées entre elles de manière commutable pour former un point neutre (290) par le biais du dispositif d'isolement de point neutre (292).

8. Circuit de puissance côté véhicule (210) selon la revendication 7, comprenant en outre un moyen de commande (280) qui est conçu pour mettre le dispositif de commutation (260) et le dispositif d'isolement de point neutre (292) sélectivement dans un état de filtre et un état de machine,
- à l'état de filtre, le moyen de commande (280) commandant le dispositif d'isolement de point neutre (292) selon un état de commutation ouvert et le dispositif de commutation (260) selon un état de commutation fermé de sorte que les enroulements (250a-c) soient reliés aux condensateurs (270 ; 72) pour former un filtre passe-bas de troisième ordre au moins ; et
- à l'état de machine, le moyen de commande (280) commandant le dispositif d'isolement de point neutre (292) selon un état de commutation fermé et le dispositif de commutation (260) selon un état de commutation ouvert de sorte que les enroulements (250a-c) soient reliés pour former un enroulement de stator triphasé.

9. Circuit de puissance côté véhicule (10) selon l'une des revendications précédentes, un filtre CEM (F2), dont la fréquence de coupure est supérieure à une fréquence de coupure du filtre de forme de signal (F1), étant monté en amont de la borne de tension alternative externe (220).

10. Circuit de puissance côté véhicule (10) selon l'une des revendications précédentes, la borne de courant alternatif externe (220) étant conçue conformément à la norme IEC 62196.
